# EUROPEAN PATENT APPLICATION

(11) **EP 4 648 422 A1**
(43) Date of publication of application: **12.11.2025**
(21) Application number: 23914761.4
(22) Date of filing: 18.12.2023
(51) Int. Cl.: H04N 19/597

(54) **IMAGE PROCESSING DEVICE, IMAGE PROCESSING METHOD, AND PROGRAM**

(30) Priority: 05.01.2023 JP 2023000706
(71) Applicant: Canon Kabushiki Kaisha, Tokyo, 146-8501 (JP)
(72) Inventor: YONEDA Keigo, Tokyo 146-8501 (JP)
(74) Representative: Canon Europe Limited
(86) International application number: PCT/JP2023/045322
(87) International publication number: WO 2024/147274

(57) **Abstract**

A first image processing apparatus 20 acquire a depth image including a depth value determined based on a distance between a subject and a camera, for each of a plurality of cameras. Next, a determination unit 304 identifies, based on a first partial region of the subject that is included in a specific depth image among the plurality of depth images a second partial region corresponding to the first partial region, from a different depth image. A changed depth image generation unit 305 generate a changed depth image signal-processed in such a manner as to reduce a difference between depth values of the second partial region of the different depth image. An encoding unit 307 encodes a plurality of the generated changed depth images, and a transmission unit 308 transmits the encoded changed depth images.

## Description

### Technical Field

The present disclosure relates to a technique of transmitting data for generating a three-dimensional (3D) model.

### Background Art

In the technique of transmitting a 3D model representing a three-dimensional shape of an object, there is a method of generating and encoding a plurality of depth images indicating distances between the object and a plurality of cameras, and transmitting the encoded depth images to a client. The client decodes the depth images, and restores a 3D model based on the decoded depth images. PTL 1 discusses a method of transmitting a depth image generated from a 3D model, by a method varying for each 3D model, in order to reduce an amount of data to be transmitted.

### Citation List

### Patent Literature

International Patent Publication No. WO 2018/123801

### Summary of Invention

### Technical Problem

Nevertheless, if the number of viewpoints of depth images to be generated is increased to enhance reproducibility of a three-dimensional (3D) model to be restored by the client, there is concern that an amount of data to be transmitted increases, and a transmission band is compressed.

In view of the foregoing, the present disclosure is directed to reducing a data amount in transmitting data for generating a 3D model.

### Solution to Problem

To achieve the above-described purpose, an image processing apparatus of the present disclosure includes the following configuration. More specifically, an image processing apparatus includes an acquisition unit configured to acquire a depth image including a depth value determined based on a distance between a subject and a camera, for each of a plurality of cameras, an identification unit configured to identify, based on a first partial region of the subject that is included in a specific depth image among the plurality of depth images acquired by the acquisition unit, a second partial region corresponding to the first partial region, from a different depth image, a generation unit configured to generate a changed depth image signal-processed in such a manner as to reduce a difference between depth values of the second partial region of the different depth image, an encoding unit configured to encode a plurality of the changed depth images generated by the generation unit, and an output unit configured to output the plurality of changed depth images encoded by the encoding unit.

### Advantageous Effects of Invention

According to the present disclosure, it is possible to reduce a data amount in transmitting data for generating a three-dimensional (3D) model.

### Brief Description of Drawings

[Fig. 1] Fig. 1 is a configuration diagram of an image processing system.
[Fig. 2] Fig. 2 is a hardware configuration diagram of an image processing apparatus.
[Fig. 3] Fig. 3 is a block diagram illustrating a functional configuration example of the image processing system.
[Fig. 4] Fig. 4 is a diagram illustrating the generation of a changed depth image and a changed texture image according to a first exemplary embodiment.
[Fig. 5] Fig. 5 is a flowchart illustrating an example of generation and transmission processing of three-dimensional (3D) model data according to the first exemplary embodiment.
[Fig. 6] Fig. 6 is a flowchart illustrating an example of processing of receiving 3D model data and generating a virtual viewpoint image according to the first exemplary embodiment.
[Fig. 7] Fig. 7 is a flowchart illustrating an example of control of determination of a predetermined condition according to the first exemplary embodiment.
[Fig. 8] Fig. 8 is a diagram illustrating the generation of a transmission image of 3D model data according to a second exemplary embodiment.
[Fig. 9] Fig. 9 is a flowchart illustrating an example of control of generation of a transmission image of 3D model data according to the second exemplary embodiment.
[Fig. 10] Fig. 10 is a flowchart illustrating an example of 3D model restoration processing according to the first exemplary embodiment.
[Fig. 11] Fig. 11 is a flowchart illustrating an example of processing of generating and transmitting 3D model data according to a third exemplary embodiment.
[Fig. 12] Fig. 12 is a flowchart illustrating an example of processing of generating and transmitting 3D model data according to a fourth exemplary embodiment.
[Fig. 13] Fig. 13 is a flowchart illustrating an example of 3D model restoration processing according to a fifth exemplary embodiment.

### Description of Embodiments

Hereinafter, preferred exemplary embodiments of the present disclosure will be described in detail with reference to the drawings. Nevertheless, the present disclosure is not limited to the following exemplary embodiments. In the drawings, the same or similar components are assigned the same reference numerals, and the redundant description will be omitted.

### (First Exemplary Embodiment)

In the present exemplary embodiment, processing of transmitting a changed depth image and a changed texture image generated from multi-viewpoint depth images and texture images, from a server to a client will be described.

In the present exemplary embodiment, the description will be given assuming that the word "image" includes the concepts of moving images and still images unless otherwise stated. More specifically, a first image processing apparatus 20 and a second image processing apparatus 30 can process whichever of still images and moving images.

### <Configuration of Image Processing System>

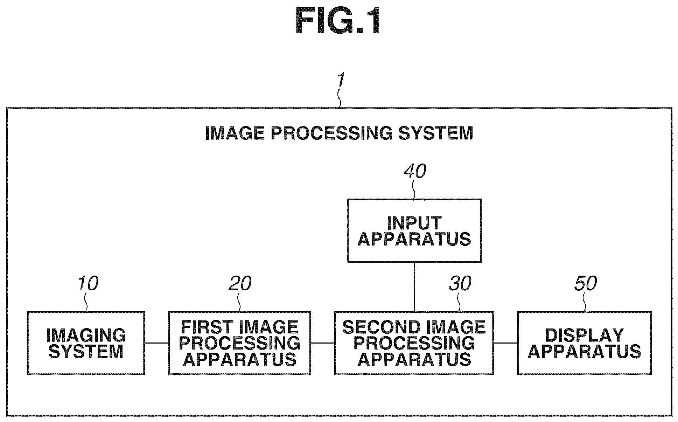

Fig. 1 is a diagram illustrating an example of an overall configuration of an image processing system according to the present exemplary embodiment. An image processing system 1 generates a three-dimensional (3D) model of an object using images (multi-viewpoint images) obtained by capturing images of a subject from different directions by a plurality of physical cameras. Then, the image processing system 1 generates and encodes a depth image and a texture image necessary for restoring a 3D model, from the generated 3D model, and transmits these images and information necessary for restoring a 3D model, to a client. The image processing system 1 includes an imaging system 10, the first image processing apparatus 20, the second image processing apparatus 30, an input apparatus 40, and a display apparatus 50.

The imaging system 10 includes a plurality of physical cameras, and the plurality of physical cameras are arranged at different positions and perform synchronous image capturing of a subject (object). Then, a plurality of synchronously-captured images and external/internal parameters of the physical cameras of the imaging system 10 are transmitted to the first image processing apparatus 20. The external parameters of the cameras are parameters indicating the positions and orientations of the cameras (e.g., rotation matrix and positional vector, etc.). The internal parameters of the cameras are internal parameters unique to cameras, and include a focal distance, an image center, a lens distortion parameter, and the like, for example. The external parameters and the internal parameters of the camera will be collectively referred to as camera parameters.

Based on multi-viewpoint images input from the imaging system 10, and camera parameters of the physical cameras, the first image processing apparatus 20 generates a 3D model of an object serving as a foreground. Then, the first image processing apparatus 20 generates a depth image and a texture image necessary for restoring a 3D model, and outputs to the second image processing apparatus 30 the generated depth image and texture image together with information (metadata) for restoring a 3D model. The object serving as a foreground (hereinafter, will be referred to as a "foreground object") is a human or a moving object existing within an image capturing range of the imaging system 10, for example. The texture image is an image representing the color of a foreground object, and is an image in which the color of a region different from the foreground object is set to a predetermined value (e.g., black color). The metadata refers to, for example, camera parameters of each physical camera included in the imaging system 10.

The second image processing apparatus 30 restores a 3D model by receiving a changed depth image, a changed texture image, and metadata from the first image processing apparatus 20, and decoding these. As a 3D model restoration method, 3D model restoration is performed by back-projecting the changed depth image and the changed texture image to a three-dimensional space based on camera parameters of the physical camera included in the metadata. The second image processing apparatus 30 also calculates camera parameters of a virtual camera based on an input value received from the input apparatus 40 to be described below, and generates a virtual viewpoint image based on the calculated camera parameters and the restored 3D model. Furthermore, the second image processing apparatus 30 outputs the generated virtual viewpoint image to the display apparatus 50. The second image processing apparatus 30 may also outputs the camera parameters of the virtual camera to the first image processing apparatus 20.

The virtual camera refers to an imaginary camera different from a plurality of imaging apparatuses actually installed around an image capturing region, and refers to concept for conveniently describing a virtual viewpoint used in the generation of a virtual viewpoint image. That is, a virtual viewpoint image can be regarded as an image captured from a virtual viewpoint set within a virtual space associated with an image capturing region. Then, the position and the direction of a viewpoint in the imaginary image capturing can be represented as the position and the direction of a virtual camera. In other words, in a case where a camera is assumed to exist at the position of a virtual viewpoint set within a space, the virtual viewpoint image can be said to be an image simulating a captured image to be obtained by the camera.

In the present exemplary embodiment, a temporal transition of a virtual viewpoint will be described as a virtual camera path. Nevertheless, it is not essential for the implementation of the configuration of the present exemplary embodiment to use the concept of virtual cameras. In other words, it is sufficient that information indicating a specific position and information indicating a direction within a space are at least set, and a virtual viewpoint image is generated in accordance with the set information.

The input apparatus 40 receives the designation of viewpoint information about a virtual camera, and transmits information corresponding to the designation, to the second image processing apparatus 30. For example, the input apparatus 40 includes input units such as a joystick, a jog dial, a touch panel, a keyboard, and a mouse. A client that designates viewpoint information about the virtual camera designates the position and the orientation of the virtual camera by operating the input units.

The display apparatus 50 displays a virtual viewpoint image generated and output by the second image processing apparatus 30. The client views the virtual viewpoint image displayed on the display apparatus 50, and designates the position and the orientation of the next virtual camera via the input apparatus 40.

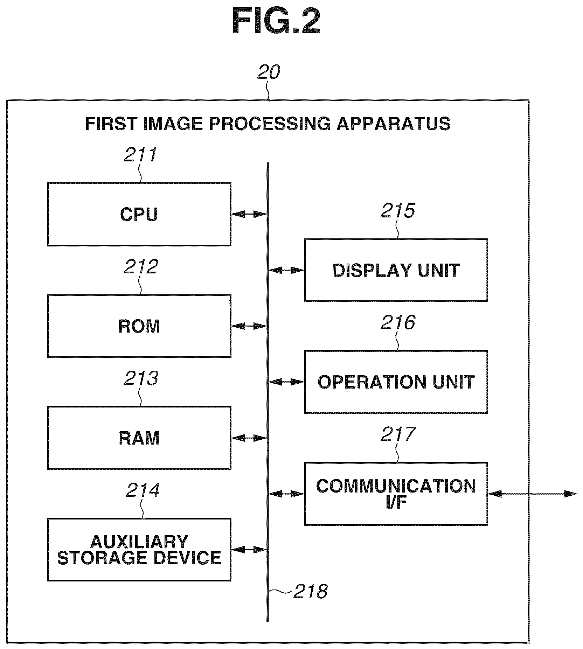

A hardware configuration of the first image processing apparatus 20 will be described with reference to Fig. 2. A hardware configuration of the second image processing apparatus 30 is also similar to the configuration of the first image processing apparatus 20 that is to be described below. The first image processing apparatus 20 includes a central processing unit (CPU) 211, a read-only memory (ROM) 212, a random access memory (RAM) 213, an auxiliary storage device 214, a display unit 215, an operation unit 216, a communication interface (I/F) 217, and a bus 218.

By controlling the entire first image processing apparatus 20 using computer programs and data that are stored in the ROM 212 and the RAM 213, the CPU 211 implements the functions of the first image processing apparatus 20 illustrated in Fig. 1. Alternatively, the first image processing apparatus 20 may include one or a plurality of pieces of dedicated hardware different from the CPU 211, and the dedicated hardware may execute at least part of processing to be executed by the CPU 211. Examples of the dedicated hardware include an application specific integrated circuit (ASIC), a Field Programmable Gate Array (FPGA), and a digital signal processor (DSP). The ROM 212 stores programs not required to be changed. The RAM 213 temporarily stores programs and data supplied from the auxiliary storage device 214, and data supplied from the outside via the communication I/F 217. The auxiliary storage device 214 includes a hard disc drive, for example, and stores various types of data such as image data and voice data.

The display unit 215 includes a liquid crystal display, a light-emitting diode (LED) and the like, for example, and displays a graphical user interface (GUI) for the client operating the first image processing apparatus 20. The operation unit 216 includes, for example, a keyboard, a mouse, a joystick, and a touch panel, receives an operation performed by the client, and inputs various instructions to the CPU 211. The CPU 211 operates as a display control unit that controls the display unit 215, and an operation control unit that controls the operation unit 216. The communication I/F 217 is used for the communication with an external apparatus of the first image processing apparatus 20. For example, in a case where the first image processing apparatus 20 is connected to an external apparatus in a wired manner, a cable for communication is connected to the communication I/F 217. In a case where the first image processing apparatus 20 has a function of wirelessly communicating with an external apparatus, the communication I/F 217 includes an antenna. The bus 218 transmits information by connecting the components of the first image processing apparatus 20.

In the present exemplary embodiment, the display unit 215 and the operation unit 216 exist in the first image processing apparatus 20, but at least either one of the display unit 215 and the operation unit 216 may exist as a separate apparatus on the outside of the first image processing apparatus 20.

### <Configuration of First Image Processing Apparatus>

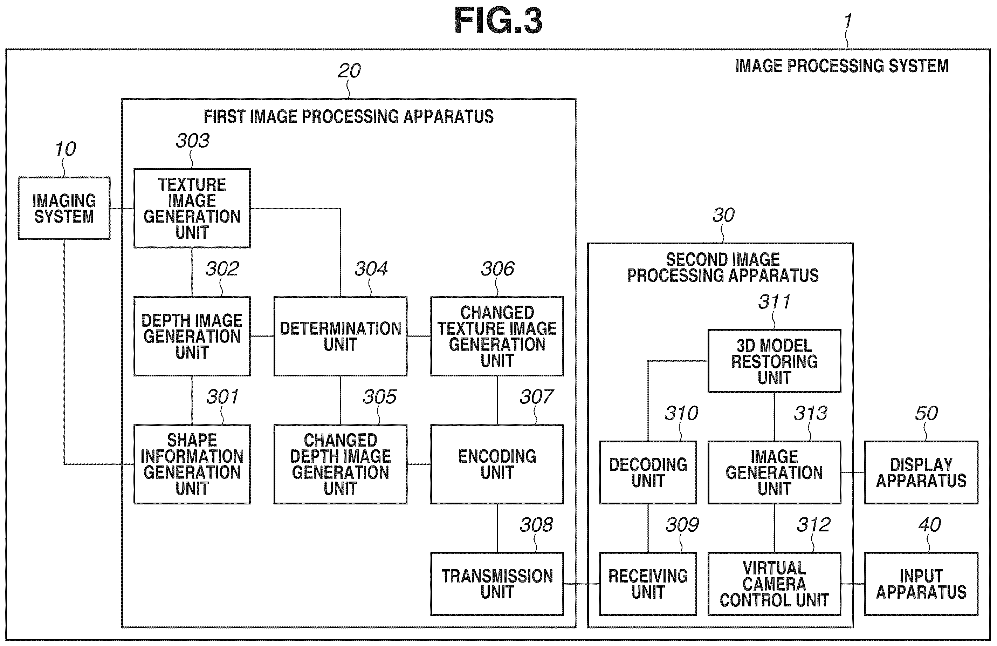

Fig. 3 is a block diagram illustrating a functional configuration of the image processing system 1. In the image processing system 1, the first image processing apparatus 20 encodes and transmits a changed depth image and a changed texture image, and the second image processing apparatus 30 restores a 3D model and generates a virtual viewpoint image.

The first image processing apparatus 20 includes a shape information generation unit 301, a depth image generation unit 302, a texture image generation unit 303, a determination unit 304, a changed depth image generation unit 305, a changed texture image generation unit 306, an encoding unit 307, and a transmission unit 308.

The shape information generation unit 301 estimates shape information indicating a three-dimensional shape of a foreground object, using multi-viewpoint images and camera parameters of physical cameras that have been received from the imaging system 10, using the communication I/F 217. For example, The visual hull (shape-from-silhouette) is used for the estimation of shape information about a foreground object. Furthermore, by coloring processing on the estimated shape information about the foreground object based on a multi-viewpoint image, a 3D model of the foreground object is generated. That is, the 3D model of the foreground object includes shape information and color information about the foreground object. The shape information is not specifically limited as long as the shape information is information indicating a three-dimensional shape of the foreground object. Hereinafter, an example in which the shape information is represented by a 3D point group of the foreground object (aggregate of points having three-dimensional coordinates) will be described, but the shape information is not limited to this. The shape information may be represented by meshes or voxels, for example. The color information is information indicating colors allocated to components (point, polygon, voxel, etc.) included in the shape information, and is information reproducing the color of the foreground object. The shape information generation unit 301 outputs the generated 3D point group and camera parameters of the physical cameras to the depth image generation unit 302.

The depth image generation unit 302 generates a depth image of the foreground object based on the shape information about the foreground object and the camera parameters of the physical cameras that have been input from the shape information generation unit 301. A depth image is generated for each physical camera using the camera parameters of the physical cameras. Specifically, initialization is performed by setting an initial value such as 0 to each pixel of the depth image. Then, each point in the 3D point group of the foreground object is projected to the same plane as an image capturing plane of the physical cameras. A distance (depth) from the camera to the surface of the foreground object is calculated for each projected pixel, and a depth value (depth value) is set in each pixel of the depth image. The depth image generation unit 302 outputs the generated depth image to the texture image generation unit 303, and outputs the depth image and the camera parameters of the physical cameras to the determination unit 304.

The texture image generation unit 303 generates a texture image based on multi-viewpoint images received from the imaging system 10, and the depth images received from the depth image generation unit 302, using the communication I/F 217. Specifically, the texture image generation unit 303 generates a texture image by performing processing of leaving pixel values of a captured image in a case where the depth image includes a depth value other than the initial value at the same coordinates in the multi-viewpoint images and the depth image, and solidly filling the image with a single color (e.g., black color) in other cases. The texture image generation unit 303 outputs the generated texture image to the determination unit 304.

For the purpose of reducing an amount of data to be transmitted from the first image processing apparatus 20 to the second image processing apparatus 30, the determination unit 304 generates determination information by performing the determination of a predetermined condition based on input data from the depth image generation unit 302 and the texture image generation unit 303. The determination unit 304 outputs the generated determination information to the changed depth image generation unit 305 and the changed texture image generation unit 306.

The determination information generation processing includes visibility determination processing of each point of a 3D point group constituting a foreground object, and identification processing of identifying a physical camera (hereinafter, will be referred to as a "representative camera") that has captured an image of each point with high accuracy, from among physical cameras identified to be visible cameras in the visibility determination processing.

In the visibility determination processing, processing of determining whether each point in a 3D point group is visible to each physical camera is performed, and a physical camera (visible camera) that can capture an image of each point is identified. Specifically, a certain point in the 3D point group is regarded as a focused point, a depth value is calculated by projecting the focused point to a physical camera, and if a difference between a pixel value (depth value) of a depth image of the projection destination physical camera and a depth value of the focused point is equal to or smaller than a threshold value, the camera is determined to be a visible camera, and if the difference is larger than the threshold value, the camera is determined to be an invisible camera.

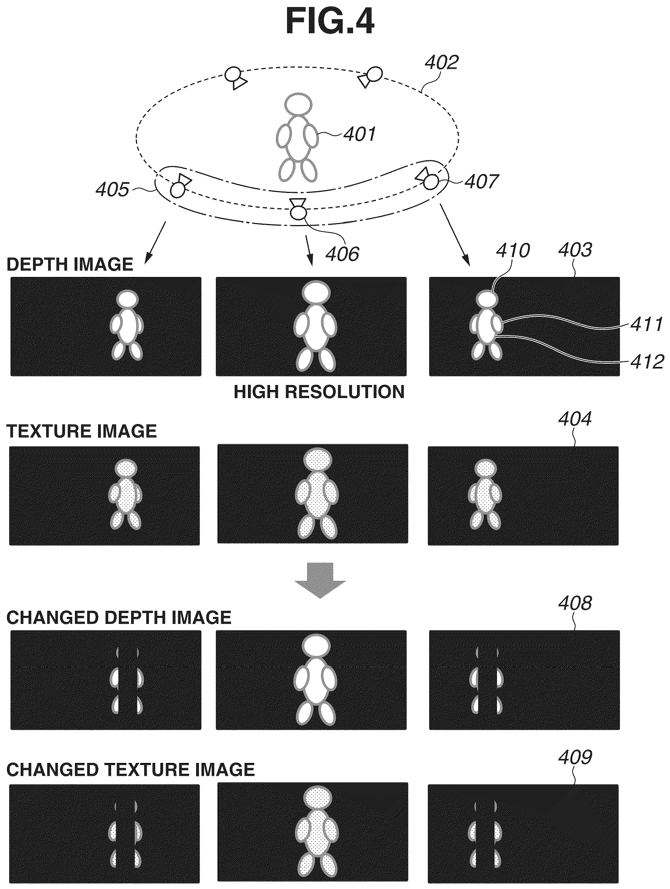

In the identification processing, a representative camera that can restore a 3D model most accurately in restoring a 3D model is identified from among visible cameras of the focused point. The representative camera identification processing will be described with reference to Fig. 4 to be described below. Accordingly, the determination information includes information identifying a camera for which determination is made to be visible for each point in a 3D point group (partial region of a subject), and information indicating a representative camera corresponding to each point.

In addition, the determination unit 304 outputs shape information about a foreground object and the camera parameters of the physical cameras from the depth image generation unit to the changed depth image generation unit 305 and the changed texture image generation unit 306.

The changed depth image generation unit 305 generates a changed depth image based on data input from the determination unit 304. The changed depth image generation unit 305 outputs the generated changed depth image to the encoding unit 307. The changed depth image is generated by leaving pixels including a depth value at which each physical camera is determined to be a representative camera, and changing (signal processing) pixel values of the remaining pixels to the same value (e.g., 0) in the camera. Consequently, in a case where image encoding of the changed depth image is performed, an encoding ratio becomes higher and a data amount is reduced.

The changed texture image generation unit 306 generates a changed texture image based on data input from the determination unit 304. The changed texture image generation unit 306 outputs the generated changed texture image to the encoding unit 307. Similarly to the changed depth image generation, the changed texture image is generated by leaving pixels including a depth value at which each physical camera is determined to be a representative camera, and changing pixel values of the remaining pixels to the same value (e.g., 0). Consequently, similarly to the changed depth image, in a case where image encoding of the changed texture image is performed, an encoding ratio becomes higher and a data amount is reduced.

The encoding unit 307 acquires the changed depth image and camera parameter of the physical cameras from the changed depth image generation unit 305, and the changed texture image from the changed texture image generation unit 306. The encoding unit 307 encodes the acquired changed depth image and the changed texture image using a moving image encoding method complying with the standard such as H.264 (International Organization for Standardization (ISO)/IEC14496-10, version 14.0) or H.265 (ISO/IEC23008-3, version 8.0). The encoding method is not limited to a moving image encoding method, and it is sufficient that an image can be encoded to a size with a data amount smaller than an original data amount, and file encoding may be performed. By filling unnecessary pixel values of the changed depth image and the changed texture image with an initial value or a single color, an encoding ratio becomes higher, and it becomes possible to reduce a data amount. The encoding unit 307 outputs the encoded changed depth image and the changed texture image, and the camera parameters of the physical cameras to the transmission unit 308.

The transmission unit 308 transmits encoded images and the camera parameters of the physical cameras input from the encoding unit 307 to a receiving unit 309 to be described below, using the communication I/F 217.

Alternatively, the first image processing apparatus 20 may clip a rectangular image capturing range of a subject from a changed depth image and a changed texture image that have not been subjected to encoding, and encode the rectangle image (region of interest (ROI) image). In this case, coordinate information about the clipped rectangle image is included as metadata. By transmitting not the entire image but a rectangle image, it becomes possible to reduce a data amount.

Furthermore, the first image processing apparatus 20 may generate a depth image including a highly-precise depth value such as a single-precision floating point (32 bit) that cannot be subjected to moving image encoding. In this case, image encoding is performed after depth information is converted into a value with a precision (8 bit or 10 bit) with which it is possible to be subjected to image encoding. As a conversion method, for example, scalar quantization processing may be performed, and a quantized depth image may be encoded and transmitted. In this case, a smallest value and a largest value of a value range of a depth before quantization are included as metadata. By performing scalar quantization, it is possible for a user to restore a 3D model of an image capturing target or a foreground object existing in an image capturing range that has been insufficient with image-encodable precision.

### <Configuration of Second Image Processing Apparatus>

The second image processing apparatus 30 includes the receiving unit 309, a decoding unit 310, a 3D model restoring unit 311, a virtual camera control unit 312, and an image generation unit 313.

The receiving unit 309 receives encoded images and the camera parameters of the physical cameras from the transmission unit 308 using the communication I/F 217, and outputs the received data to the decoding unit 310.

The decoding unit 310 decodes the encoded changed depth image and the changed texture image acquired from the receiving unit 309, and outputs the decoded changed depth image and the changed texture image to the 3D model restoring unit 311 together with the camera parameters of the physical cameras.

The 3D model restoring unit 311 restores a 3D model based on input data from the decoding unit 310. Specifically, based on the camera parameters of the physical cameras, the 3D model restoring unit 311 generates shape information about the 3D model from the changed depth image and also generates color information about the 3D model from the changed texture image. Specifically, for each changed depth image, using the camera parameters of a physical camera corresponding to the image, depth values excluding 0 are converted into coordinates in a three-dimensional space (in a virtual space). That is, coordinate values of points constituting a point group of the 3D model are generated.

The 3D model restoring unit 311 also acquires pixel values of pixels of the changed texture image that correspond to pixels of the changed depth image, and sets the color of the generated points. By performing the processing on all the changed depth images, shape information (geometry information) and its color information about the 3D model are generated, and a 3D model is restored. The 3D model restoring unit 311 outputs the restored 3D model to the image generation unit 313.

The virtual camera control unit 312 generates camera parameters of a virtual camera from input values input by the client via the input apparatus 40, using the communication I/F 217, and outputs the generated camera parameters to the image generation unit 313.

The image generation unit 313 generates a virtual viewpoint image based on the 3D model acquired from the 3D model restoring unit 311, and the camera parameters of the virtual camera that have been acquired from the virtual camera control unit 312. The virtual viewpoint image generation is performed by arranging a 3D model of a foreground object, a background 3D model, and a virtual camera on a three-dimensional space, and generating an image viewed from the virtual camera. The background 3D model is a computer graphic (CG) model generated to be separately combined with the foreground object, for example, and preliminarily generated and stored in the second image processing apparatus 30 (e.g., stored in the ROM 212 in Fig. 2). The foreground and background 3D models are rendered by an existing CG rendering method. The image generation unit 313 transmits the generated virtual viewpoint image to the display apparatus 50.

In the present exemplary embodiment, a virtual viewpoint image generated by the second image processing apparatus 30 is assumed to be displayed on the display apparatus 50, but the configuration is not limited to this. For example, the second image processing apparatus 30 may be a tablet terminal, and may have a configuration including an input unit and a display unit.

### <Description of Generation Example of Changed Depth Image and Changed Texture Image That Is Based on Determination of Predetermined Condition>

Fig. 4 is a schematic diagram illustrating an example of a generation method of a changed depth image and a changed texture image. Images of a subject 401 are captured by physical cameras 402, and the first image processing apparatus 20 generates a plurality of depth images including a depth image 403, and a plurality of texture images including a texture image 404. The plurality of depth images and the plurality of texture images are depth images and texture images corresponding to the respective physical cameras 402.

In a case where the first image processing apparatus 20 transmits these images to the second image processing apparatus 30 as-is, if the number of portions of the subject redundantly image-captured from viewpoints increases, a data amount increases. Specifically, if the number of viewpoints increases, since occlusion in which the subject 401 is hidden by another object and becomes invisible from the physical cameras 402 decreases, in the second image processing apparatus 30, it is possible to restore a 3D model with high reproducibility. Nevertheless, due to a data amount increase, if the client tries to view a high image quality video in an environment with a narrow transmission band or on a local terminal with low processing performance, a frame rate might decrease. In order to provide the client with a high sense of realism, it is desirable that a virtual viewpoint image to be displayed on the display apparatus 50 has higher image quality and a frame rate such as 60 frames per second (fps) having no uncomfortable feeling in an image. For this reason, it is necessary to reduce an amount of data to be transmitted, with holding data necessary for accurately restoring a 3D model.

In view of the foregoing, the first image processing apparatus 20 performs visibility determination processing at each point of a 3D point group of the subject 401, and identifies a representative camera that has captured an image of the subject 401 at high resolution, from among visible cameras 405 that have redundantly captured images of points of the subject 401. In addition, using a representative camera identified at each point, a changed depth image and a changed texture image to be transmitted to the client are generated. In the example illustrated in Fig. 4, the visible cameras 405 are three physical cameras among the five physical cameras 402.

Processing of identifying a representative camera corresponding to each point of the 3D point group of the subject 401 will be described. Because the visibility determination on each point of the 3D point group has been described above, the description of the visibility determination will be omitted. Based on the relationship of positions and focal distances between the points of the 3D point group of the subject 401 and the visible cameras 405, the first image processing apparatus 20 identifies a camera that has captured an image of each point at the highest resolution, as a representative camera 406.

The determination as to whether resolution is high resolution is made based on a size in a captured image of each point of a 3D point group that is identified based on positions and focal distances of each point of the 3D point group of the subject 401 and each physical camera of the visible cameras 405, for example. That is, if the number of pixels (the number of pixels) of each point of the 3D point group in a captured image of a certain camera is larger than other cameras, it is determined that the camera has captured the image at higher resolution. The determination as to whether resolution is high resolution is not limited to this method. The above-described processing is performed on each point of the 3D point group. Thus, the determination unit 304 generates, for each pixel of each image of a plurality of depth images and a plurality of texture images, determination information indicating whether the image is an image of a representative camera. The determination information is not limited to this, and the determination unit 304 may generate determination information indicating a representative camera corresponding to each point of the 3D point group. The determination unit 304 outputs the information to the changed depth image generation unit 305 and the changed texture image generation unit 306.

The processing of generating the changed depth image and the changed texture image will be described. The changed depth image generation unit 305 and the changed texture image generation unit 306 acquire the determination information from the determination unit 304. Next, based on the determination information, pixels of the depth image 403 and the texture image 404 corresponding to a physical camera identified to be a representative camera are left among the images of the visible cameras 405, and pixel values of depth images and texture images other than images of the representative camera are set to a predetermined value. For example, in the example illustrated in Fig. 4, a middle physical camera 406 of the visible cameras 405 is identified to be a representative camera of a region (a plurality of points) 410 constituting a head portion of the subject 401, and a region (a plurality of points) 412 constituting a body. In addition, a right physical camera 407 is identified to be a representative camera of a region (a plurality of points) 411 constituting a left arm of the subject 401. In the depth image 403 and the texture image 404 corresponding to the physical camera 407, because a representative camera of the regions 410 and 412 is the physical camera 406, pixel values of pixels corresponding to the regions 410 and 412 are changed to a predetermined value. That is, pixel values of a plurality of pixels corresponding to the regions 410 and 412 are changed to the same value. In the depth image 403 and the texture image 404 corresponding to the physical camera 407, because a representative camera of the region 411 is the physical camera 407, pixel values of pixels corresponding to the region 411 are not changed. By performing similar processing on depth images and texture images of physical cameras included in the visible cameras 405, a changed depth image 408 and a changed texture image 409 of the visible cameras 405 are generated. A partial region of a subject of a representative camera may be called a first partial region, and a partial region of a subject of another camera may be called a second partial region. In this case, a partial region of a subject to be image-captured by a plurality of cameras is called a subject region. The subject region is used to make a distinction between a plurality of regions of the subject.

By the second image processing apparatus 30 generating a virtual viewpoint image by restoring a 3D model using the above-described images, it is possible to reduce processing load on a transmission band. Because data is reduced in a plurality of changed depth images 407 and a plurality of changed texture images 408 only by redundant information among the cameras, it is possible to accurately restore shape information even for a complicated 3D model in which occlusion easily occurs.

The representative camera identification method is not limited to the above-described method, and a representative camera may be determined by determining whether each point of the 3D point group is near the outline of a subject on a captured image of a physical camera. In this case, because a physical camera by which each point is projected near the outline is determined to be a camera with low reliability, and a physical camera by which each point is not projected near the outline is determined to be a representative camera, it is possible to generate a changed depth image and a changed texture image in which higher-resolution pixels are left.

In the present exemplary embodiment, the number of representative cameras is one, but a plurality of representative cameras may be installed, and it is sufficient that the number of cameras that redundantly capture images of each point of the 3D point group is reduced.

In the present exemplary embodiment, the above-described processing is performed on each point of the 3D point group that indicates the subject 401, but the processing is not limited to this. For example, processing of identifying one representative camera for a plurality of points of a 3D point group of the subject 401, and generating a changed depth image and a changed texture image may be performed. That is, it is sufficient that a partial region of the subject 401 is set and a representative camera corresponding to the partial region can be identified.

### <Processing To Be Performed by First Image Processing Apparatus>

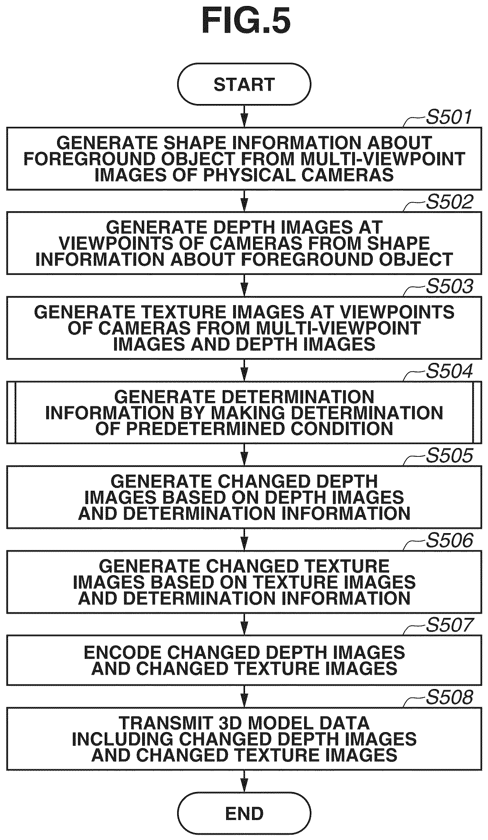

Fig. 5 is a flowchart illustrating a flow of processing of controlling encoding and transmission of 3D model data in the first image processing apparatus 20 according to the present exemplary embodiment. The flow illustrated in Fig. 5 is implemented by a control program stored in the ROM 212, being loaded onto the RAM 213, and the CPU 211 executing this. The flow illustrated in Fig. 5 is executed by being triggered by reception of multi-viewpoint images and the camera parameters of the physical cameras by the shape information generation unit 301 from the imaging system 10. In the present exemplary embodiment, 3D model data is data for generating a 3D model, and is data indicating a plurality of depth images and a plurality of texture images, and the camera parameters of the physical cameras corresponding to the plurality of depth images, for example.

In step S501, the shape information generation unit 301 estimates and generates shape information about a foreground object based on multi-viewpoint images. The generated shape information and the received camera parameters of the physical cameras are output to the depth image generation unit 302.

In step S502, the depth image generation unit 302 generates a depth image corresponding to each physical camera of the physical cameras, based on the shape information generated by the shape information generation unit 301, and the received camera parameters of the physical cameras. Specifically, the depth image generation unit 302 generates a 3D point group of a foreground object from the shape information, calculates a depth value (distance) by projecting each point of the 3D point group to the same plane as an image capturing plane of the physical cameras, and generates a depth image by setting the depth value in each pixel. The generated depth image is output to the texture image generation unit 303 and the determination unit 304. The depth image generation unit also outputs the camera parameters to the determination unit 304.

In step S503, the texture image generation unit 303 generates a texture image corresponding to each physical camera of the physical cameras, based on the multi-viewpoint images received from the imaging system 10, and the depth image acquired from the depth image generation unit 302. The generated texture image is output to the determination unit 304.

In step S504, the determination unit 304 performs the determination of a predetermined condition based on input data, and generates determination information. The input data and the generated determination information are output to the changed depth image generation unit 305 and the changed texture image generation unit 306. The determination processing of the predetermined condition will be described below.

In step S505, the changed depth image generation unit 305 generates a plurality of changed depth images based on input data from the determination unit 304. The generated changed depth images are output to the encoding unit 307. Specific generation processing of changed depth images will be described below.

In step S506, the changed texture image generation unit 306 generates a plurality of changed texture images based on input data from the determination unit 304. The generated changed texture images are output to the encoding unit 307. Specific generation processing of changed texture images will be described below.

In step S507, the encoding unit 407 encodes the changed depth images and the changed texture images output from the changed depth image generation unit 305 and the changed texture image generation unit 306. The encoded data is output to the transmission unit 308.

In step S508, the transmission unit 308 transmits data acquired from the transmission unit 308, and 3D model data including the camera parameters of the physical cameras, to the receiving unit 309, and this flow ends.

### < Processing To Be Performed by Second Image Processing Apparatus>

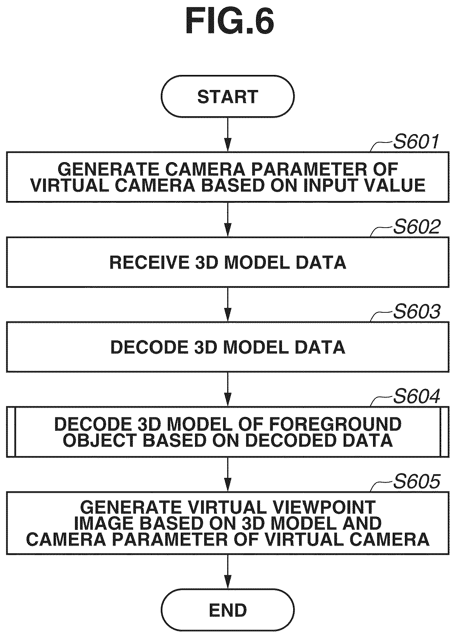

Fig. 6 is a flowchart illustrating a flow of processing of controlling the generation of a virtual viewpoint image using a changed depth image and a changed texture image in the second image processing apparatus 30 according to the present exemplary embodiment. The flow illustrated in Fig. 6 is executed by being triggered by reception of input values by the virtual camera control unit 312 from the input apparatus 40.

In step S601, the virtual camera control unit 312 generates camera parameters of a virtual camera based on the input values from the input apparatus 40. The generated camera parameters of the virtual camera are output to the image generation unit 313.

In step S602, the receiving unit 309 receives 3D model data from the transmission unit 308 of the first image processing apparatus 20. The receiving unit 309 need not directly receive 3D model data from the first image processing apparatus 20, and may receive 3D model data via an external server or a database, for example. The received 3D model data is output to the decoding unit 310.

In step S603, the decoding unit 310 decodes the 3D model data acquired from the receiving unit 309, and generates a changed depth image, a changed texture image, and camera parameters of the physical cameras. The generated data is output to the 3D model restoring unit 311.

In step S604, the 3D model restoring unit 311 restores a 3D model of a foreground object based on the data acquired from the decoding unit 310. The restored 3D model is output to the image generation unit 313. The 3D model restoration processing will be described below.

In step S605, the image generation unit 313 generates a virtual viewpoint image based on input data from the virtual camera control unit 312 and the 3D model restoring unit 311, and this flow ends.

After this flow ends, the generated virtual viewpoint image is transmitted to the display apparatus 50, and displayed on the display apparatus 50.

The control of encoding and transmission of 3D model data, and generation of a virtual viewpoint image according to the present exemplary embodiment has been described above.

### <Description of Control of Determination Information Generation>

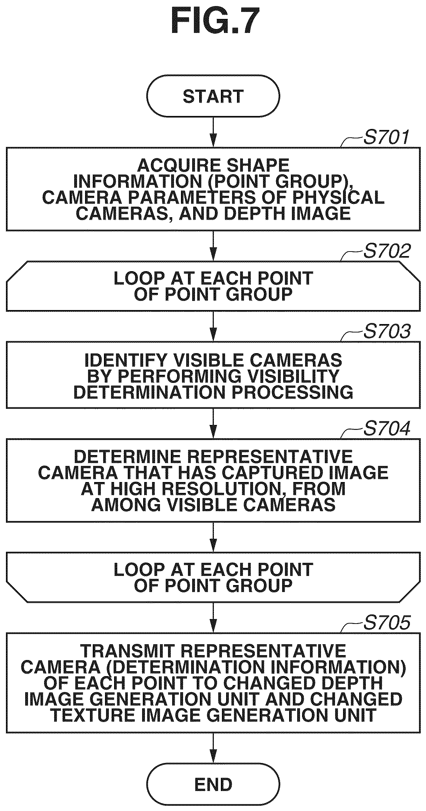

Fig. 7 illustrates an example of a flowchart illustrating a flow of determination information generation processing according to the present exemplary embodiment. The description will be given of the case of making determination based on whether an image of each point of the 3D point group has been captured at high resolution, which has been described with reference to Fig. 4. That is, when images of a focused point are redundantly captured by a plurality of physical cameras, pixel values of a depth image and a texture image of a camera that has captured an image at high resolution are held, and pixel values of cameras that have captured images at low resolution are deleted. The flow illustrated in Fig. 7 is executed by the determination unit 304. The flow illustrated in Fig. 7 is executed by being triggered by reception of a depth image output from the depth image generation unit 302. The flow illustrated in Fig. 7 describes the details of the control of generating determination information by the determination of the predetermined condition in step S504 of Fig. 5.

In step S701, the determination unit 304 acquires a 3D point group, camera parameters of physical cameras, and a depth image from the depth image generation unit 302.

In step S702, the processing in steps S703 and S704 is repeatedly performed for each point of the 3D point group.

In step S703, the determination unit 304 performs visibility determination processing on the acquired each point of the 3D point group, and identifies visible cameras.

In step S704, the determination unit 304 identifies a representative camera that has captured an image at high resolution, from among the visible cameras. In the present exemplary embodiment, if the number of pixels of each point of the 3D point group in a captured image of a certain camera is larger than other cameras, it is determined that the camera has captured the image at higher resolution. Then, the camera determined to have captured the image at high resolution is identified as a representative camera.

In step S705, the determination unit 304 generates, for each pixel of a plurality of depth images, information indicating whether a camera corresponding to a depth image is a representative camera, as determination information, and transmits the determination information to the changed depth image generation unit 305 and the changed texture image generation unit 306.

### <Description of Control of 3D Model Restoration>

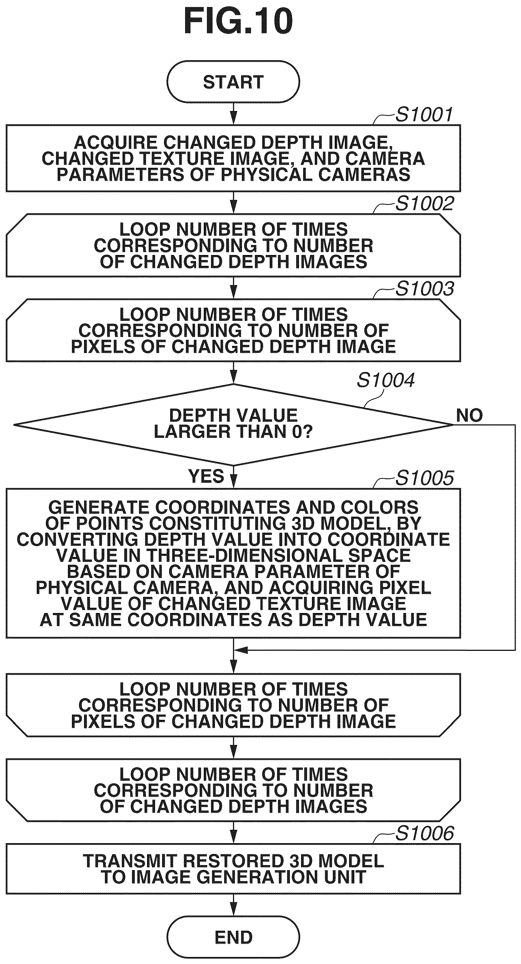

Fig. 10 illustrates an example of a flowchart illustrating a flow of 3D model restoration processing according to the present exemplary embodiment. The flow illustrated in Fig. 10 is executed by the 3D model restoring unit 311 of the second image processing apparatus 30, and describes the details of the control of restoring a 3D model of a foreground object based on the decoded data in Fig. 6.

In step S1001, the 3D model restoring unit 311 acquires a changed depth image, a changed texture image, and the camera parameters of the physical cameras from the decoding unit 310.

In step S1002, the processing from steps S1003 to S1005 is repeatedly performed the number of times corresponding to the number of changed depth images.

In step S1003, the processing in steps S1004 and S1005 is repeatedly performed the number of times corresponding to the number of pixels of the changed depth image.

In step S1004, processing branching is performed in accordance with a depth value of each pixel of the changed depth image. Specifically, in a case where the depth value is larger than 0, the processing proceeds to step S1005, and in a case where the depth value is equal to or smaller than 0, the processing in step S1005 is skipped.

In step S1005, points constituting a 3D point group are generated by converting the depth value of each pixel of the changed depth image into a coordinate value on a three-dimensional space based on the camera parameters of the physical cameras. Next, the color of points constituting the 3D point group is determined by identifying coordinates on the changed texture image that is the same coordinates as coordinates on the changed depth image of the pixel corresponding to the depth value, and acquiring pixel values of pixels of the changed texture image. By determining each point of the 3D point group and the color by repeatedly performing the processing in step S1005 on each pixel of the changed depth image and a plurality of changed depth images, a 3D point group is restored. In the present exemplary embodiment, a 3D model is described to be 3D point group, but the 3D model is not limited to this. For example, in a case where a 3D model is a mesh model, coordinates on a three-dimension space of a polygon constituting the mesh model and the color are determined.

In step S1006, the restored 3D model is output to the image generation unit 313.

As described above, in the present exemplary embodiment, processing of generating a changed depth image and a changed texture image in which redundancy is eliminated by identifying viewpoints with an overlapping partial region of a subject from multi-viewpoint depth images, and selecting a viewpoint to be transmitted, from among the identified viewpoints is performed. By the above-described processing, it is possible to reduce a data amount in transmitting data for generating a 3D model.

The example in which a 3D model includes shape information and color information has been described, but the 3D model may include only shape information in some cases. That is, a 3D model becomes a 3D model indicating a three-dimensional shape of a foreground object, to which a color is not allocated. In this case, in Fig. 3, the first image processing apparatus 20 need not include the texture image generation unit 303 and the changed texture image generation unit 306, and a texture image and a changed texture image need not be generated.

In the present exemplary embodiment, when a changed depth image is generated by the changed depth image generation unit 305, pixel values of pixels different from pixels determined to be captured by a representative camera are set to the same value (e.g., 0), but the configuration is not limited to this. For example, pixel values of pixels corresponding to a partial region may be changed in such a manner as to reduce a difference between pixel values of pixels corresponding to the partial region. In this case, in the 3D model restoring unit 311 of the second image processing apparatus 30, points are generated at coordinates on a three-dimensional space in such a manner as to correspond to the pixel values set in such a manner as to reduce a difference between pixel values. At this time, determination information generated by the determination unit 304 of the first image processing apparatus 20 may be acquired, and a pixel value based on which points are generated on the three-dimensional space may be determined based on the determination information.

In the present exemplary embodiment, the determination information includes information identifying a camera determined to be visible for a partial region of a subject, and information indicating a representative camera corresponding to each partial region, but the determination information is not limited to this. The determination information may include information indicating pixels corresponding to a partial region, in a depth image of a camera determined to be visible for a partial region of a subject, and information indicating pixels of a depth image of a representative camera corresponding to the partial region.

### (Second Exemplary Embodiment)

In the first exemplary embodiment, the description has been given of the processing of generating a changed depth image and a changed texture image by making a selection about whether to transmit each pixel, from multi-viewpoint depth images and texture images, based on the determination of the predetermined condition. Nevertheless, depending on the position and the orientation of a physical camera identified to be a representative camera at each point of the 3D point group, the color of a restored 3D model might become an unnatural color. Thus, in the second exemplary embodiment, a configuration of generating a changed texture image by blending pixel values of multi-viewpoint texture images based on determination of a predetermined condition will be described as the second exemplary embodiment. The description of parts similar to those in the first exemplary embodiment such as a hardware configuration and a functional configuration of an image processing apparatus will be omitted or simplified, and generation control of a changed texture image, which serves as a different point, will be mainly described below.

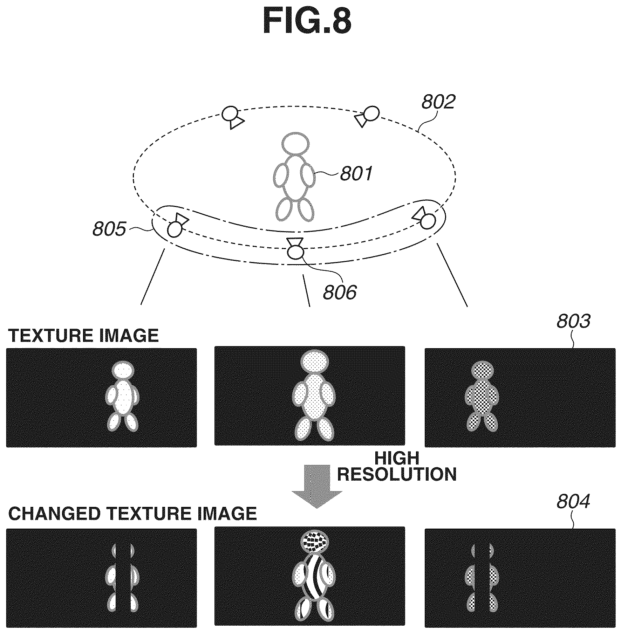

Fig. 8 is a diagram illustrating an example of a method of generating determination information (representative camera) based on the determination of a predetermined condition, and generating a changed texture image using multi-viewpoint texture images according to the present exemplary embodiment. Fig. 8 is a schematic diagram in which images of a subject 801 are captured by physical cameras 802, and a changed texture image 804 is generated based on a texture image 803 generated by the first image processing apparatus 20.

In Fig. 8, the determination of the predetermined condition is made based on whether an image of a subject is captured at high resolution, which is described with reference to Fig. 4. That is, at each point of a 3D point group of the subject 801, among pixel values of texture images redundantly showing the point, pixel values of texture images showing the point at high resolution are left, and pixel values of the other texture images are deleted. In the present exemplary embodiment, unlike the first exemplary embodiment, instead of leaving as-is pixel values of texture images showing the point at high resolution, the pixel values are processed using pixel values of the other texture images that are to be deleted. For example, an average value of pixel values to be left and pixel values to be deleted is set as a pixel value of a changed texture image. This is because, if visible cameras 805 that redundantly capture images of the same region of the subject 801 capture the image of the subject 801 from different directions, the color of the pixel values vary for each physical camera due to the reflection of illumination. Thus, if pixel values of the captured image of a representative camera 806 is used as-is as color information about a 3D model, a representative camera changes for each region of the subject, and color switching becomes noticeable, whereby the client might feel uncomfortable. In view of the foregoing, by blending pixel values of texture images obtained by the visible cameras 805 redundantly capturing images of a region of the subject 801, when it is restored as a 3D model, the color switching of the subject 801 becomes less noticeable, and an uncomfortable feeling of the client is reduced. In the present exemplary embodiment, color blending is performed by averaging of pixel values, but color blending is not limited to this, and weighted averaging weighted for each camera may be performed.

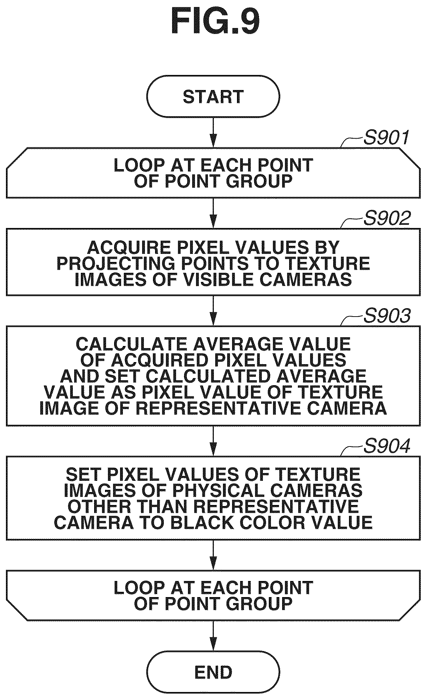

Fig. 9 is a flowchart illustrating a flow of processing of the above-described changed texture image generation method. The flow illustrated in Fig. 9 is executed by the changed texture image generation unit 306. The execution of the flow illustrated in Fig. 9 is started by being triggered by reception of determination information (representative camera), visible cameras, a 3D model of a foreground object (3D point group), a texture image of each physical camera, and camera parameters from the determination unit 304. The flow illustrated in Fig. 9 describes the details of the control of generating a changed texture image based on a texture image and determination information in 506 of Fig. 5, after changing the control to control suitable for the second exemplary embodiment.

In step S901, the processing in steps S902 to S904 is repeatedly performed at each point of the 3D point group.

In step S902, pixel values of texture images of the visible cameras are acquired by projecting each point to the texture images of visible cameras.

In step S903, an average value of the pixel values acquired in step S902 is calculated, and set as a pixel value of a texture image of a representative camera.

In step S904, pixel values of texture images of physical cameras other than the representative camera are set to a black color value.

After this flow ends, the generated changed texture image is encoded by the encoding unit 307, and transmitted to the second image processing apparatus 30 via the transmission unit 308.

By the above-described processing, it is possible to reduce the possibility that the color of a restored 3D model becomes an unnatural color. For example, in a case where the color of an image captured by each physical camera changes due to the reflection of illumination during subject image capturing, it is possible to reduce color switching for each region during 3D model restoration.

### (Third Exemplary Embodiment)

In the first and second exemplary embodiments, a depth image and a texture image are generated from the same viewpoint as physical cameras. Nevertheless, in a case where a distance between the subject 401 and physical cameras is large, to generate a depth image including the subject, a coordinate interval on a three-dimensional space that corresponds to a depth value needs to be made larger. Thus, when a 3D model is restored on a client terminal, a coordinate interval between points of the 3D point group becomes large, and reproducibility of the 3D model declines. Thus, in the third exemplary embodiment, a plurality of arbitrary viewpoints (virtual viewpoints) are set, and depth images and texture images at virtual viewpoints are generated. In this case, a changed depth image and a changed texture image are generated by generating a depth image and a texture image by projecting to a plurality of arbitrary virtual viewpoints from a 3D model having shape information and color information, and performing determination processing similar to the present exemplary embodiment. Then, as information for restoring a 3D model, the above-described images are transmitted together with camera parameters at a virtual viewpoint.

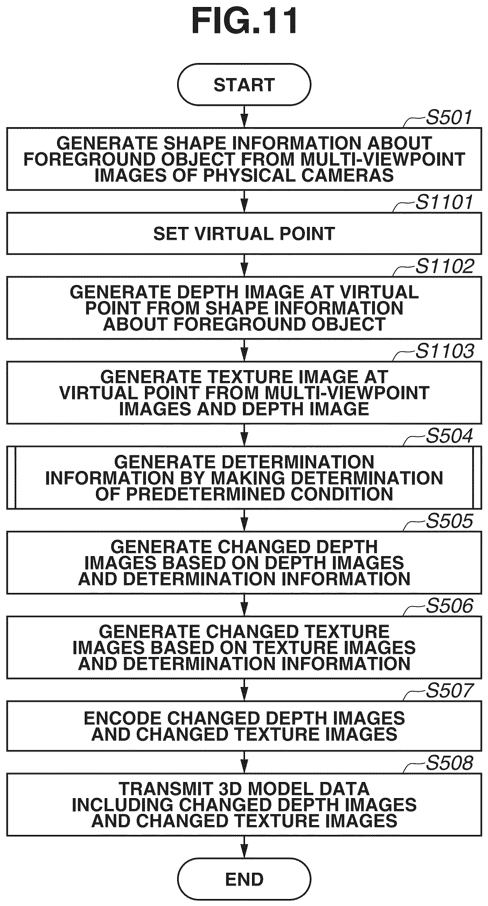

Fig. 11 illustrates a flow illustrating an example of generation and transmission processing of 3D model data according to the present exemplary embodiment. Because the processing in steps S501 and steps S504 to S508 is processing similar to that in Fig. 5, the description will be omitted. In the present exemplary embodiment, a virtual viewpoint to be set is assumed to be visible to the subject 401.

In step S1101, a virtual viewpoint setting unit (not illustrated) sets a virtual viewpoint as a viewpoint for generating a depth image and a texture image. In the present exemplary embodiment, a cube surrounding the subject 401 is provided, and a virtual viewpoint is arranged in such a manner as to be positioned at the center on each surface, and be oriented toward the center of the cube. The length of each side of the cube is preset, but the length of each side may be changed in accordance with the size of a subject. The virtual viewpoint setting is not limited to this, and a virtual viewpoint may be arranged based on a client operation. Camera parameters corresponding to the set virtual viewpoint are output to the depth image generation unit 302.

In step S1102, the depth image generation unit 302 generates a depth image at the virtual viewpoint based on the shape information generated by the shape information generation unit 301, and the received camera parameters corresponding to the virtual viewpoint. The generated depth image is output to the texture image generation unit 303 and the determination unit 304. The depth image generation unit the outputs the camera parameters to the determination unit 304.

In step S1103, the texture image generation unit 303 generates a texture image at the virtual viewpoint based on multi-viewpoint images received from the imaging system 10, and the depth image acquired from the depth image generation unit 302. The generated texture image is output to the determination unit 304.

By the above-described processing, even in a case where a distance between the subject 401 and the physical cameras is large, it is possible to precisely restore a 3D model on a client terminal.

In the present exemplary embodiment, a virtual viewpoint to be set is assumed to be visible to the subject 401, but the configuration is not limited to this, and a virtual viewpoint to be set is considered to be invisible to the subject 401. For example, such cases include a case where a plurality of subjects are adjacent to each other. In a case where subject 3D models are adjacently installed in a virtual space, by adjusting a plurality of subject positions, a virtual camera is set after a distance between subjects is provided. With this configuration, it is possible to prevent a set virtual camera from becoming invisible to a specific subject.

### (Fourth Exemplary Embodiment)

In the first to third exemplary embodiments, after a 3D model of a foreground object is generated from multi-viewpoint images, a depth image and a texture image are generated. Nevertheless, because the 3D model of the foreground object is generated, a terminal with low processing performance might take time in the processing of generating a 3D model. Thus, in the fourth exemplary embodiment, a changed depth image and a changed texture image are generated using a depth image and a texture image acquired from physical cameras, without generating a 3D model of a foreground object, and after the changed depth image and the changed texture image are encoded, the encoded changed depth image and the encoded changed texture image are transmitted.

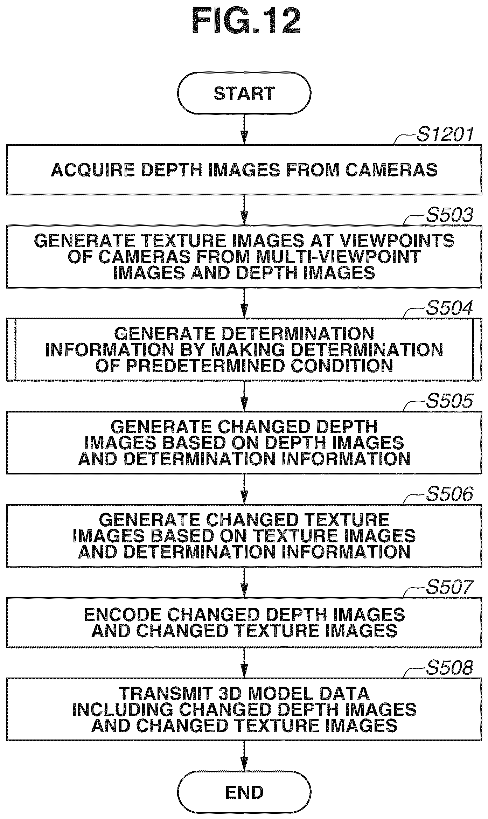

Fig. 12 is a flowchart illustrating an example of generation and transmission processing of 3D model data according to the present exemplary embodiment. Because the processing in steps S503 to S508 is similar to that in Fig. 5, the description will be omitted.

In step S1201, the first image processing apparatus 20 acquires depth images acquired from the physical cameras, from the imaging system 10. The acquired depth images are output to the texture image generation unit 303.

By the above-described processing, it is possible to generate a changed depth image and a changed texture image without generating a 3D model. Thus, even on a terminal with low processing performance, it is possible to generate a changed depth image and a changed texture image.

Also in a case where a camera that can acquire a depth image and a texture image without generating a 3D model like an RGB-D camera is used as physical cameras, the processing in the present exemplary embodiment can be used. For example, by arranging RGB-D cameras around a subject and capturing images, it is possible to simultaneously acquire a depth image and a texture image. In this case, as a determination method, a point on a three-dimensional space to which a depth value of a certain RGB-D camera is projected is projected to another RGB-D camera, and the projected value and the depth value of the RGB-D camera are compared, and if the values are the same or fall within a fixed difference range, the point is determined to be a point of which images are redundantly captured.

### (Fifth Exemplary Embodiment)

In the first to fourth exemplary embodiments, after a changed depth image and a changed texture image are generated and encoded, the changed depth image and the changed texture image are transmitted, and a 3D model is restored in the second image processing apparatus 30 being a client terminal. Specifically, a 3D model is restored by converting a depth value into a coordinate value in a three-dimensional space, and granting a pixel value of a pixel in a texture image that corresponds to a pixel in a depth image, to the coordinates. Nevertheless, the possibility that a client desires to set the color of a 3D model on a client terminal can be considered. In view of the foregoing, in the fifth exemplary embodiment, a 3D model is restored from an encoded changed depth image.

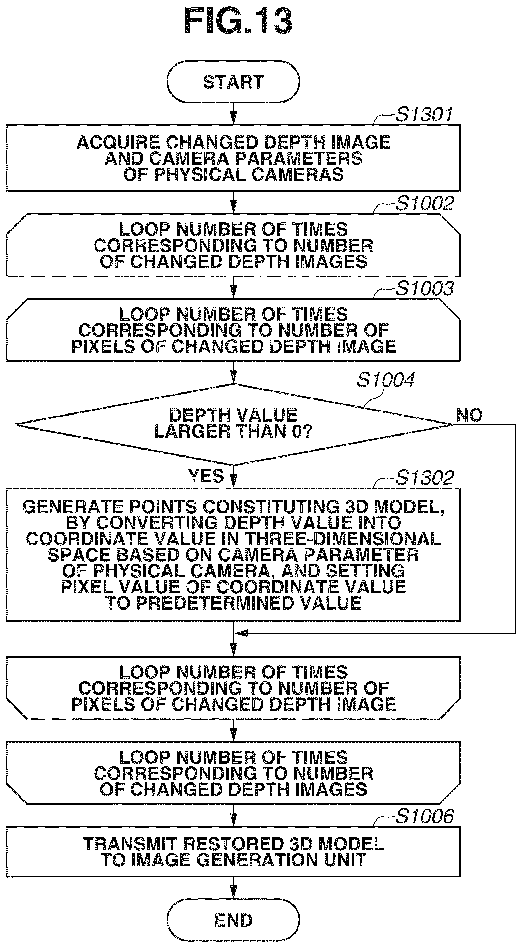

Fig. 13 is a flowchart illustrating an example of 3D model restoration processing according to the fifth exemplary embodiment. Because the processing in steps S1002 to S1004, and S1006 is similar to that in Fig. 10, the description will be omitted.

In step S1301, the receiving unit 309 of the second image processing apparatus 30 acquires a changed depth image and camera parameters of physical cameras.

In step S1302, a depth value is converted into a coordinate value in a three-dimensional space using the camera parameters of the physical cameras, and a pixel value of coordinates corresponding to the coordinate value is set to a predetermined value. In the present exemplary embodiment, the pixel value is set to a white color value. By the above-described processing, points constituting a 3D point group are generated.

By the above-described processing, it is possible to restore a 3D model from an encoded changed depth image, and the client can accordingly set the color of the restored model freely.

In the present exemplary embodiment, because the color of a 3D model is assumed to be set on a client terminal, it is unnecessary to transmit a texture image, and it is possible to further reduce a data amount during transmission as compared with the case of transmitting a texture image. Because there is no need to transmit a texture image, there is no need to generate a texture image. Accordingly, the first image processing apparatus 20 may generate a depth image, encode the depth image, and then transmit the encoded depth image without generating a texture image. In this case, because processing of generating, encoding, and transmitting a texture image is cut, it is possible to reduce a calculation amount of the first image processing apparatus 20.

A computer program implementing a part or all of the control in the present exemplary embodiment, and the functions of the above-described exemplary embodiment may be supplied to an image processing system via a network or various storage media. Then, a computer (or CPU or micro processing unit (MPU), or the like) in the image processing system may read out and execute the program. In this case, the program, and a storage medium storing the program are included in the present disclosure.

The disclosure of the present exemplary embodiment includes the following configurations, method, and program.

### (Configuration 1)

An image processing apparatus comprising:
an acquisition unit configured to acquire a depth image including a depth value determined based on a distance between a subject and a camera, for each of a plurality of cameras;
an identification unit configured to identify, based on a first partial region of the subject that is included in a specific depth image among the plurality of depth images acquired by the acquisition unit, a second partial region corresponding to the first partial region, from a different depth image;
a generation unit configured to generate a changed depth image signal-processed in such a manner as to reduce a difference between depth values of the second partial region of the different depth image;
an encoding unit configured to encode a plurality of the changed depth images generated by the generation unit; and
an output unit configured to output the plurality of changed depth images encoded by the encoding unit.

### (Configuration 2)

The image processing apparatus according to Configuration 1, wherein the generation unit changes a difference between depth values of the second partial region of the different depth image in such a manner as to eliminate the difference.

### (Configuration 3)

The image processing apparatus according to Configuration 1 or 2, wherein the generation unit changes a depth value of the second partial region of the different depth image to an initial value.

### (Configuration 4)

The image processing apparatus according to Configuration 1, wherein the generation unit generates a changed depth image obtained by signal-processing the specific depth image including the first partial region, by not changing a depth value of the first partial region and changing a difference between depth values in a region different from the first partial region in such a manner as to reduce the difference, in the specific depth image.

### (Configuration 5)

The image processing apparatus according to any one of Configurations 1 to 4, wherein the identification unit identifies the first partial region for each subject region obtained by dividing the subject into a plurality of regions.

### (Configuration 6)

The image processing apparatus according to any one of Configurations 1 to 5, wherein the identification unit identifies the depth image in which a partial region of the subject that is included in the depth image satisfies a predetermined condition, among the plurality of depth images acquired by the acquisition unit, as a specific depth image, and identifies the partial region as the first partial region.

### (Configuration 7)

The image processing apparatus according to Configuration 6, wherein the predetermined condition is a condition that the partial region is larger than a partial region of a subject that is included in the different depth image.

### (Configuration 8)

The image processing apparatus according to Configuration 6 or 7,
wherein the acquisition unit acquires a three-dimensional (3D) model indicating a three-dimensional shape of the subject, and camera parameters indicating a position and orientation of a camera corresponding to the depth image, and
wherein the identification unit identifies a partial region of the subject that is included in the depth image, based on the 3D model, the camera parameters, and the depth image.

### (Configuration 9)

The image processing apparatus according to Configuration 8, wherein the acquisition unit acquires a depth image of a camera that captures an image of a partial region of the subject, among cameras to be used to generate a 3D model indicating a three-dimensional shape of the subject.

### (Configuration 10)

The image processing apparatus according to according to any one of Configurations 1 to 9, wherein the depth image is generated based on an imaginary camera positioned in a virtual space.

### (Configuration 11)

The image processing apparatus according to any one of Configurations 1 to 10,
wherein the acquisition unit acquires a texture image indicating a color of the subject, for each of a plurality of cameras,
wherein the identification unit identifies, based on a third partial region of the subject that is included in a specific texture image among the plurality of texture images acquired by the acquisition unit, a fourth partial region corresponding to the third partial region, from a different texture image,
wherein a generation unit generates a changed texture image signal-processed in such a manner as to reduce a difference between pixel values of the fourth partial region of the different texture image,
wherein an encoding unit encodes a plurality of changed texture images generated by the generation unit, and
wherein the plurality of changed texture images encoded by the encoding unit are output.

### (Configuration 12)

The image processing apparatus according to any one of Configurations 1 to 11, wherein a subject region of the subject that corresponds to the first partial region is a subject region of the subject that corresponds to the second partial region.

### (Configuration 13)

An image processing apparatus comprising:
an acquisition unit configured to acquire an image that is an image obtained by encoding a depth image including a depth value determined based on a distance between a subject and a camera, and is an image encoded for a depth image signal-processed in such a manner as to reduce a difference between depth values of a second partial region of a different depth image that corresponds to a first partial region of the subject that is included in a specific depth image of a plurality of the images, the second partial region being identified based on the first partial region; and
a decoding unit configured to decode the encoded image acquired by the acquisition unit.

### (Configuration 14)

The image processing apparatus according to Claim 13,
wherein the acquisition unit acquires viewpoint information indicating a position and orientation of a virtual camera, and
wherein a generation unit configured to generate a virtual viewpoint image based on the image decoded by the decoding unit and the viewpoint information is included.

### (Method 1)

An image processing method comprising:
acquiring a depth image including a depth value determined based on a distance between a subject and a camera, for each of a plurality of cameras;
identifying, based on a first partial region of the subject that is included in a specific depth image among the plurality of depth images acquired by the acquiring, a second partial region corresponding to the first partial region, from a different depth image;
generating a changed depth image signal-processed in such a manner as to reduce a difference between depth values of the second partial region of the different depth image;
encoding a plurality of the changed depth images generated by the generating; and
outputting the plurality of changed depth images encoded by the encoding.

### (Method 2)

An image processing method comprising:
acquiring an image that is an image obtained by encoding a depth image including a depth value determined based on a distance between a subject and a camera, and is an image encoded for a depth image signal-processed in such a manner as to reduce a difference between depth values of a second partial region of a different depth image that corresponds to a first partial region of the subject that is included in a specific depth image of a plurality of the images, the second partial region being identified based on the first partial region; and
decoding the encoded image acquired by the acquisition unit.

### (Program)

A program for causing a computer to function as each unit of the image processing apparatus according to any one of Configurations 1 to 14.

The present invention is not limited to the above embodiments and various changes and modifications can be made within the spirit and scope of the present invention. Therefore, to apprise the public of the scope of the present invention, the following claims are made.

This application claims priority from Japanese Patent Application No. 2023-000706 filed January 5, 2023, which is hereby incorporated by reference herein.

### Reference Signs List

- 20: First Image Processing Apparatus
- 304: Determination Unit
- 302: Depth Image Generation Unit
- 305: Changed Depth Image Generation Unit
- 307: Encoding Unit
- 308: Transmission Unit

## Claims

1. An image processing apparatus comprising:
an acquisition unit configured to acquire a depth image including a depth value determined based on a distance between a subject and a camera, for each of a plurality of cameras;
an identification unit configured to identify, based on a first partial region of the subject that is included in a specific depth image among the plurality of depth images acquired by the acquisition unit, a second partial region corresponding to the first partial region, from a different depth image;
a generation unit configured to generate a changed depth image signal-processed in such a manner as to reduce a difference between depth values of the second partial region of the different depth image;
an encoding unit configured to encode a plurality of the changed depth images generated by the generation unit; and
an output unit configured to output the plurality of changed depth images encoded by the encoding unit.

2. The image processing apparatus according to Claim 1, wherein the generation unit changes a difference between depth values of the second partial region of the different depth image in such a manner as to eliminate the difference.

3. The image processing apparatus according to Claim 1, wherein the generation unit changes a depth value of the second partial region of the different depth image to an initial value.

4. The image processing apparatus according to Claim 1, wherein the generation unit generates a changed depth image obtained by signal-processing the specific depth image including the first partial region, by not changing a depth value of the first partial region and changing a difference between depth values in a region different from the first partial region in such a manner as to reduce the difference, in the specific depth image.

5. The image processing apparatus according to Claim 1, wherein the identification unit identifies the first partial region for each subject region obtained by dividing the subject into a plurality of regions.

6. The image processing apparatus according to Claim 1, wherein the identification unit identifies the depth image in which a partial region of the subject that is included in the depth image satisfies a predetermined condition, among the plurality of depth images acquired by the acquisition unit, as a specific depth image, and identifies the partial region as the first partial region.

7. The image processing apparatus according to Claim 6, wherein the predetermined condition is a condition that the partial region is larger than a partial region of a subject that is included in the different depth image.

8. The image processing apparatus according to Claim 6,
wherein the acquisition unit acquires a three-dimensional (3D) model indicating a three-dimensional shape of the subject, and camera parameters indicating a position and orientation of a camera corresponding to the depth image, and
wherein the identification unit identifies a partial region of the subject that is included in the depth image, based on the 3D model, the camera parameters, and the depth image.

9. The image processing apparatus according to Claim 8, wherein the acquisition unit acquires a depth image of a camera that captures an image of a partial region of the subject, among cameras to be used to generate a 3D model indicating a three-dimensional shape of the subject.

10. The image processing apparatus according to Claim 1, wherein the depth image is generated based on an imaginary camera positioned in a virtual space.

11. The image processing apparatus according to Claim 1,
wherein the acquisition unit acquires a texture image indicating a color of the subject, for each of a plurality of cameras,
wherein the identification unit identifies, based on a third partial region of the subject that is included in a specific texture image among the plurality of texture images acquired by the acquisition unit, a fourth partial region corresponding to the third partial region, from a different texture image,
wherein a generation unit generates a changed texture image signal-processed in such a manner as to reduce a difference between pixel values of the fourth partial region of the different texture image,
wherein an encoding unit encodes a plurality of changed texture images generated by the generation unit, and
wherein the plurality of changed texture images encoded by the encoding unit are output.

12. The image processing apparatus according to Claim 1, wherein a subject region of the subject that corresponds to the first partial region is a subject region of the subject that corresponds to the second partial region.

13. An image processing apparatus comprising:
an acquisition unit configured to acquire an image that is an image obtained by encoding a depth image including a depth value determined based on a distance between a subject and a camera, and is an image encoded for a depth image signal-processed in such a manner as to reduce a difference between depth values of a second partial region of a different depth image that corresponds to a first partial region of the subject that is included in a specific depth image of a plurality of the images, the second partial region being identified based on the first partial region; and
a decoding unit configured to decode the encoded image acquired by the acquisition unit.

14. The image processing apparatus according to Claim 13,
wherein the acquisition unit acquires viewpoint information indicating a position and orientation of a virtual camera, and
wherein a generation unit configured to generate a virtual viewpoint image based on the image decoded by the decoding unit and the viewpoint information is included.

15. An image processing method comprising:
acquiring a depth image including a depth value determined based on a distance between a subject and a camera, for each of a plurality of cameras;
identifying, based on a first partial region of the subject that is included in a specific depth image among the plurality of depth images acquired by the acquiring, a second partial region corresponding to the first partial region, from a different depth image;
generating a changed depth image signal-processed in such a manner as to reduce a difference between depth values of the second partial region of the different depth image;
encoding a plurality of the changed depth images generated by the generating; and
outputting the plurality of changed depth images encoded by the encoding.

16. An image processing method comprising:
acquiring an image that is an image obtained by encoding a depth image including a depth value determined based on a distance between a subject and a camera, and is an image encoded for a depth image signal-processed in such a manner as to reduce a difference between depth values of a second partial region of a different depth image that corresponds to a first partial region of the subject that is included in a specific depth image of a plurality of the images, the second partial region being identified based on the first partial region; and
decoding the encoded image acquired by the acquiring.

17. A program for causing a computer to function as each unit of the image processing apparatus according to any one of Claims 1 to 14.
